## Europäisches Patentamt
## European Patent Office
## Office européen des brevets

(19)

(11) Veröffentlichungsnummer: **0 210 482**
**B1**

(12) **EUROPÄISCHE PATENTSCHRIFT**

(45) Veröffentlichungstag der Patentschrift:
**01.03.89**

(51) Int. Cl.⁴: **B 23 H 11/00, B 23 H 7/02**

(21) Anmeldenummer: **86109338.3**

(22) Anmeldetag: **08.07.86**

(54) Drahtschnetzler zum Schneiden einer aus einer Elektroerosionsmaschine abgeführten draht- oder bandförmigen Elektrode.

(30) Priorität: **22.07.85 DE 3526146**

(43) Veröffentlichungstag der Anmeldung:
**04.02.87 Patentblatt 87/6**

(45) Bekanntmachung des Hinweises auf die Patenterteilung:
**01.03.89 Patentblatt 89/9**

(84) Benannte Vertragsstaaten:
**CH DE FR GB IT LI LU SE**

(56) Entgegenhaltungen:
**CH-A- 634 497**

**PATENT ABSTRACTS OF JAPAN, unexamined applications, Sektion M, Band 6, Nr. 138, 27. Juli 1982 THE PATENT OFFICE JAPANESE GOVERNMENT, Seite 75 M 145**
**PATENT ABSTRACTS OF JAPAN, unexamined applications, Sektion M, Band 7, Nr. 215, 22. September 1983 THE PATENT OFFICE JAPANESE GOVERNMENT, Seite 53 M 244**

(73) Patentinhaber: **AG für industrielle Elektronik AGIE Losone bei Locarno, CH-6616 Losone/Locarno (CH)**

(72) Erfinder: **Tobler, Karl, CH-6673 Maggia (CH)**
Erfinder: **Derighetti, René, Via Reslina 34, CH-6616 Losone (CH)**

(74) Vertreter: **EGLI-EUROPEAN PATENT ATTORNEYS, Widenmayerstrasse 5, D-8000 München 22 (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

ACTORUM AG

## Beschreibung

Die Erfindung bezieht sich auf einen Drahtschnetzler zum Schneiden einer aus einer Elektroerosionsmaschine abgeführten draht- oder bandförmigen Elektrode mit einer Fördereinrichtung, die die Elektrode transportiert und mit einer Schneideinrichtung die rotierende Schneidelemente und ein Gegenwerkzeug aufweist, wobei die rotierenden Schneidelemente bzw. ein sie haltender Ring gegenüber ihrer Antriebswelle und die Oberfläche des Gegenwerkzeuges gegenüber dessen Halterung elektrisch isoliert sind.

Ein solcher Drahtschnetzler ist aus der JP-OS 57-61.422 bekannt.

Ähnliche Drahtschnetzler sind aus der JP-OS 57.61.423, JP-OS 58-109226, CH-PS 634 497 und der unveröffentlichten deutschen Patentanmeldung P 35 11 930 der Anmelderin bekannt.

Bei all diesen bekannten Drahtschnetzlern tritt das Problem auf, dass sich die Schneidelemente, Messer etc. sehr schnell abnutzen bzw. stumpf werden. Die Elektrode wird dann nicht mehr richtig abgeschnitten und es kommt zu einem Stau in der Maschine.

Die CH-PS 634 497 versuchte zur Lösung dieses Problems, das Schneid- und das Gegenwerkzeug in spezieller Weise auszubilden und zwar als mehrkantigen Meißel, der mit einem Amboß zusammenarbeitet, so daß die Elektrode nicht mehr zerschnitten sondern zerkerbt wird. Jedoch auch bei dieser Vorrichtung tritt noch ein für einen automatischen Dauerbetrieb nicht hinzunehmender Verschleiß des Schneidwerkzeugs auf.

Es bietet sich nun an, das Schneidwerkzeug bzw. die Messer aus verschleißfestem, elektrisch nicht leitendem Material zu machen, beispielsweise aus Keramik. Dieses Material lässt sich aber sehr schwer bearbeiten, so dass die Messer sehr teuer würden.

Aufgabe der Erfindung ist es daher, den Drahtschnetzler der eingangs genannten Art dahingehend zu verbessern, daß sein Schneidwerkzeug eine deutlich verlängerte Standzeit hat.

Diese Aufgabe wird erfindungsgemäss durch eine elektrische Verbindung gelöst, die die rotierenden Schneidelemente bzw. den diese haltenden Ring und das Gegenwerkzeug ständig zwangsweise auf dem elektrischen Potential der Elektrode hält.

Es wird also durch eine überraschend einfache elektrotechnische Maßnahme die Abnutzung der Schneidwerkezeuge verringert.

Vorteilhafte Ausgestaltungen und Weiterbildungen der Erfindung sind den Unteransprüchen zu entnehmen.

Der Erfindung liegt die Erkenntnis zugrunde, daß die Abnutzung der Schneidwerkzeuge bei den bekannten Drahtschnetzlern durch einen Elektroerosionsvorgang bedingt ist. Die aus der Elektroerosionsmaschine abgeführte draht- oder bandförmige Elektrode steht nämlich noch unter (impulsförmiger) elektrischer Spannung, die während des Elektroerodierens benötigt wird. Das die Elektrode nicht ständig mit den Schneidelementen bzw. Messern der Schneideinrichtung in Berührung steht, erfolgt dort jeweils kurz vor der Berührung zwischen Elektrode und dem einzelnen Schneidelement eine elektrische Entladung (eventuell sogar mit Funkenbildung), die zu einem elektroerosiven Abtragen von Material des Schneidelementes führt.

Dieser Effekt tritt auch bei dem Drahtschnetzler der JP-OS 57-61.422 auf, wo die Schneidelemente und die als Gegenwerkzeug dienende Rolle isoliert gelagert sind, so dass keine größeren elektrischen Ströme fließen können. Gleichwohl haben diese Elemente eine nicht zu vernachlässigende Eigenkapazität, die bei durch die Elektrode zugeführter elektrischer Spannung noch zu einem Lade- bzw. Entladestrom führt.

Im folgenden wird die Enfindung anhand von Ausführungsbeispielen im Zusammenhang mit der Zeichnung ausführlich erläutert. Es zeigt:

Fig. 1 eine Prinizipdarstellung des Drahtschnetzlers nach einem ersten Ausführungsbeispiel der Erfindung;

Fig. 2 eine Prinzipskizze einer Elektroerosionsmaschine mit dem Drahtschnetzler nach dem ersten Ausführungsbeispiel gemäß Fig. 1 und

Fig. 3 eine Ansicht einer Elektroerosionsmaschine ähnlich Fig. 2, jedoch mit einem Drahtschnetzler gemäß einem zweiten Ausführungsbeispiel der Erfindung.

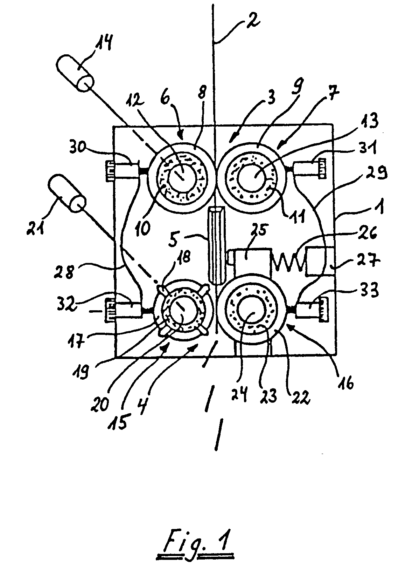

Der Drahtschnetzler 1 der Fig. 1 soll die draht- oder bandförmige Elektrode 2 in kurze Stücke zerschneiden. Diese Elektrode 2 ist — mit Ausnahme des Falles eines Drahtbruches in der Elektroerosionsmaschine — mit (impulsförmiger) elektrischer Spannung beaufschlagt. Die Elektrode 2 wird von einer Fördereinrichtung 3 aus der Elekroerosionsmaschine abgezogen und einer Schneideinrichtung 4 zugeführt. Zwischen der Fördereinrichtung 3 und der Schneideinrichtung 4 ist eine Drahtführung 5 vorgesehen, die beispielsweise ein Rohr sein kann. Im dargestellten Ausführungsbeispiel besteht die Fördereinrichtung 3 aus zwei Förderrollen 6 und 7, zwischen denen die Elektrode 2 verläuft. Beide Förderrollen 6 und 7 besitzen je einen Außenring 8 bzw. 9 aus elektrisch leitendem Material, wie beispielsweise Edelstahl. Beide Außenringe 8 und 9 sind je über einen Isolierring 10 bzw. 11 gegenüber einer Antriebsrolle 12 bzw. einer Drehachse 13 isoliert. Die Antriebswelle 12 der Förderrolle 6 wird von einem Motor 14 angetrieben. Die Förderrolle 6 treibt die Förderrolle 7 durch Reibschluß an. Die beiden Förderrollen 6 und 7 sind durch — nicht dargestellte — Spanneinrichtungen gegeneinander elastisch verspannt, so dass sie beide gegen die Elektrode 2 drücken. Damit sind auch die beiden Außenringe 8 und 9 auf dem elektrischen Potential der Elektrode 2.

Die Schneideinrichtung 4 besteht im dargestellten Ausführungsbeispiel aus einem Schneidwerkzeug 15 und einem Gegenwerkzeug 16. Das Schneidwerkzeug 15 besitzt einen (Außen-)Ring 17, der mehrere an seinem Außenumfang verteilt angeordnete Schneidelemente 18 hält. Der Ring 17 und die Schneidelemente 18 sind aus elektrisch leitfähigem Material, beispielsweise Stahl; sie stehen damit in elektrischer Verbindung miteinander. Der Ring 17 ist durch eine Isolierung 19 von einer Antriebswelle 20 isoliert. Die Antriebswelle 20 wird von einem Motor 21 angetrieben.

Das Gegenwerkzeug 16 ist als Rolle ausgebildet, die — ähnlich wie die Förderrollen 6 und 7 — aus einem (Anpreß-)Ring 22 einer Isolierung 23 und einer Drehachse 24 besteht. Die Rolle (Gegenwerkzeug 16) wird ebenfalls von dem Motor 21 angetrieben, beispielsweise durch eine Zahnradverbindung zwischen der Antriebswelle 20 und der Drehachse 24, durch einen Keilriemen oder in sonstiger bekannter Weise.

Die Antriebswelle 20 ist hier starr gelagert, während das Gegenwerkzeug 16 verschiebbar gelagert ist und zwar über eine Andruckeinheit 25, die durch eine Feder 26, die mittels einer Abstützung 27 am Gehäuse des Drahtschnetzlers abgestütz ist, das Gegenwerkzeug 16 bis zu einem Anschlag in Richtung zu dem Schneidwerkzeug 15 drückt. Damit kann das Gegenwerkzeug 16 bei Belastung durch die Schneidelemente 18 zurückweichen, so daß nur die für das Schneiden erforderliche Kraft zwischen den Schneidelementen 18 und dem Gegenwerkzeug 16 auftritt. Statt der dargestellen Lagerung können auch die einzelnen Schneidelemente gegenüber dem Ring 17 verschiebbar gelagert sein, wie es aus der JP-OS 58-109226 bekannt ist.

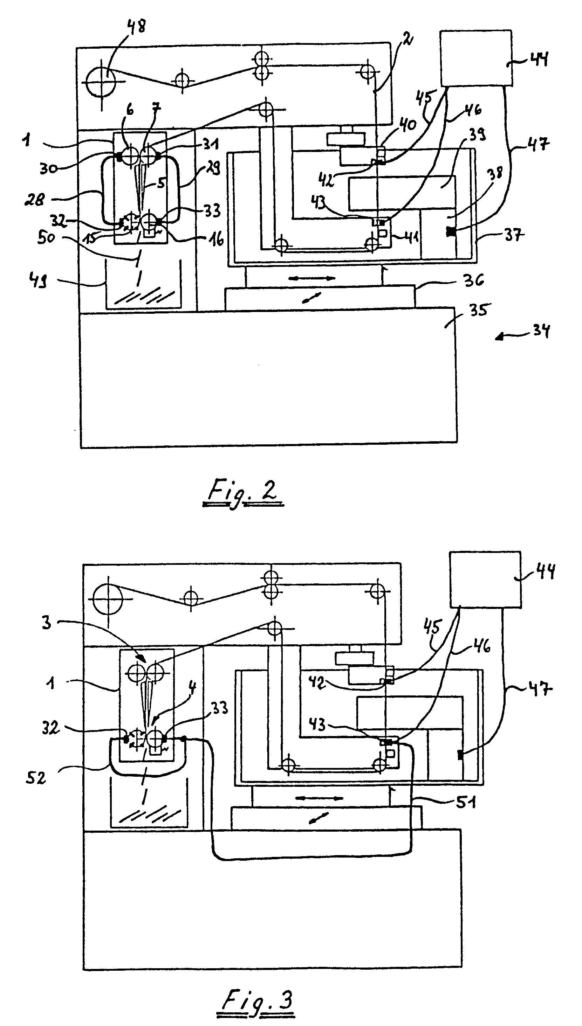

Ber der ersten Variante der Erfindung gemäss den Fig. 1 und 2 sind nun das Schneidwerkzeug 15 und das Gegenwerkzeug 16 durch elektrische Verbindungen 28 und 29 mit den Förderrollen 6 und 7 elektrisch verbunden und damit ständig und zwangsweise auf dem elektrischen Potential der Elektrode 2. Die elektrischen Verbindungen 28 und 29 sind elektrische Kabel, die an Schleifkontakte 30, 31, 32 bzw. 33 angeschlossen sind. Diese Schleifkontakte schleifen beispielsweise mittels Kohlebürsten jeweils an den elektrisch leitenden (Außen-)Ringen 8, 9, 17, 22. Im einzelnen ist damit die Förderrolle 6 mit dem die Schneidelemente 18 haltenden Ring 17 verbunden und die Förderrolle 7 mit dem Gegenwerkzeug 16 bzw. dessen Außenring 22.

Diese Variante der Erfindung hat noch zusätzlich den Vorteil, daß der Drahtschnetzler 1 bzw. dessen mit der Elektrode 2 in Berührung kommende Teile nur dann mit elektrischer Spannung beaufschlagt sind, wenn die Elektrode im Bereich der Arbeitszone der Elektroerosionsmaschine unter elektrischer Spannung steht und im Bereich zwischen der Arbeitszone und dem Drahtschnetzler nicht gebrochen ist. Ist dagegen die Elektrode stromabwärts der Arbeitszone gebrochen, so ist der Drahtschnetzler potentialfrei.

Durch die beschriebenen elektrischen Verbindungen 28 und 29 werden alle Teile der Schneideinrichtung 4, die ständig oder periodisch (wzB. die Schneidelemente 18) mit dem Draht in Berührung kommen, zwangsweise auf dem elektrischen Potential der Eletrode gehalten, so daß keine Potentialdifferenzen und damit Elektroerosionsvorgänge auftreten können.

Fig. 2 zeigt eine Elektroerosionsmaschine 34 mit dem Drahtschnetzler gemäss Fig. 1. Die EDM-Maschine 34 besitzt in bekannter Weise einen Ständer 35 mit einem Kreuzschlitten 36, auf dem ein Behälter 37 für das beim Erodieren benötigte Arbeitsmedium befestigt ist. Auf einer mit dem Behälter verbundenen Werkstückspanneinrichtung 38 ist das von der Elektrode 2 zu schneidende Werkstück aufgespannt. Beidseitig des Werkstückes 39 ist die Elektrode in einem oberen und einem unteren Drahtführungskopf 40 und 41 geführt, wo sie über Stromzuführungen 42 und 43 mit elektrischer Energie aus einem Generator 44 (Impulsgenerator) versorgt wird. Beide Stromzuführungen 42 und 43 sind somit über elektrische Leitungen 45 bzw. 46 mit dem Generator verbunden. Weiterhin ist das Werkzeug 39 bzw. die Werkstückspanneinrichtung 38 über eine elektrische Leitung 40 mit dem anderen Pol des Generators 44 verbunden. Die Elektrode wird von einer Drahtspule 48 abgewickelt, über mehrere Förder- und Umlenkrollen zum oberen Drahtführungskopf 40 geleitet, verläuft von dort durch die Arbeitszone hindurch zu dem unteren Drahtführungskopf 41 und von dort über weitere Umlenk- bzw. Förderrollen zu dem Drahtschnetzler 1. An der Maschine gemäß Fig. 2 ist auch deutlicher zu erkennen, daß ein Drahtbruch stromabwärts der Arbeitszone den Drahtschnetzer 1 potentialfrei macht, so daß freie Enden der Elektrode 2 keine Kurzschlüsse verursachen können. Die abgeschnittenen Drahtstücke fallen in einen unterhalb des Drahtschnetzlers angeordneten Auffangbehälter 49.

Bei dem Ausführungsbeispiel der Fig. 3 wird die Schneideinrichtung 4 in anderer Weise zwangsweise mit dem Potential der Elektrode 2 beaufschlagt. Dies erfolgt im Gegensatz zu den Ausführungsbeispielen der Fig. 1 und 2 nicht über die Elektrode selbst sondern durch andere elektrische Verbindungen 51 und 52. Im einzelnen sind das Schneidwerkzeug und das Gegenwerkzeug über die Schleifkontakte 32 und 33 und eine elektrische Leitung 52 elektrisch miteinander verbunden. Weiterhin ist die elektrische Leitung 52 über eine elektrische Leitung 51 direkt mit dem Generator 44 verbunden. Im dargestellten Ausführungsbeispiel erfolgt diese letztgenante Verbindung dadurch, daß die elektrische Leitung 51 an die Stromzuführung 43 des unteren Drahtführungskopfes angeschlossen ist und somit über die Leitung 46 mit dem Generator 44 verbunden ist.

Diese Variante hat den Vorteil, daß das elektrische Potential der Schneideinrichtung 4 unabhängig von dem Übergangswiderstand zwischen der Elektrode und den beiden Förderrollen 6 und 7 ist. Sie hat allerdings den Nachteil, daß bei einem Bruch der Elektrode auch ihr stromabwärts der Bruchstelle befindlicher Teil unter Spannung steht. Bei dieser Variante ist es daher wichtig, bei einem Bruch der Elektrode sofort den Generator 44 abzuschalten, was üblicherweise jedoch bei den meisten EDM-Maschinen ohnehin vorgenommen wird.

Wie dem Fachmann ohne weiteres ersichtlich, ist die Erfindung auch bei EDM-Maschinen und Drahtschnetzlern anwendbar, bei denen mehrere, parallel verlaufende Elektroden verwendet werden (Sogenannte mehrkanalige Maschinen). Hierbei ist sicherzustellen, daß die einzelnen «Kanäle» elektrisch gegeneinander isoliert sind. Dementsprechend sind die parallel zueinander auf einer Achse angeordneten Teile der Förder- und Schneideinrichtungen jeweils kanalweise elektrisch miteinander zu verbinden, wie es bei den oben beschriebenen Ausführungsbeispielen erfolgt.

Sämtliche in den Patentansprüchen, der Beschreibung und der Zeichnung dargestellen technischen Merkmale können sowohl für sich als auch in Kombination miteinander erfindungswesentlich sein.

**Patentansprüche**

1. Drahtschnetzler zum Schneiden einer aus einer Elektroerosionsmaschine abgeführten draht- oder bandförmigen Elektrode mit einer Fördereinrichtung, die die Elektrode transportiert und mit einer Schneideinrichtung, die rotierende Schneidelemente und ein Gegenwerkzeug aufweist, wobei die rotierenden Schneidelemente bzw. ein sie haltender Ring gegenüber ihrer Antriebswelle und die Oberfläche des Gegenwerkzeuges gegenüber dessen Halterung elektrisch isoliert sind, gekennzeichnet durch eine elektrische Verbindung (28, 29; 51, 52), die die rotierenden Schneidelemente (18) bzw. den diese haltenden Ring (17) und das Gegenwerkzeug (16) ständig zwangsweise auf dem elektrischen Potential der Elektrode (2) hält.

2. Drahtschnetzler nach Anspruch 1, wobei die Fördereinrichtung, als ein Paar von Förderrollen (6, 7) ausgebildet ist, dadurch gekennzeichnet, daß die Förderrollen (6, 7) elektrisch gegenüber ihrer Antriebswelle (12) bzw. Drehachse (13) isoliert sind (Isolierung 10, 11) und daß die elektrische Verbindung (28, 29), die Förderrollen (6, 7) mit den rotierenden Schneidelementen (18) bzw. den diese haltenden Ring (17) und dem Gegenwerkzeug (16) verbindet.

3. Drahtschnetzler nach Anspruch 2, bei dem das Gegenwerkzeug eine sich drehende Rolle (16) ist, dadurch gekennzeichnet, daß die die elektrische Verbindung mittels Schleifkontakten (30, 31, 32, 33) und an diese angeschlossene elektrische Leitungen (28, 29; 51, 52) realisiert ist.

4. Drahtschnetzler nach Anspruch 3, dadurch gekennzeichnet, daß eine der Förderrollen (6) mit dem die Schneidelemente (18) haltenden Ring (17) mittels einer elektrischen Leitung (28) und Schleifkontakten (30, 32) direkt elektrisch verbunden ist und daß die andere Förderrolle (7) mit dem sich drehenden Ring (22) des Gegenwerkzeuges (16) mittels einer weiteren elektrischen Leitung (29) und Schleifkontakten (31, 33) direkt elektrisch verbunden ist.

5. Drahtschnetzler nach Anspruch 1, dadurch gekennzeichnet, daß die Schneidelemente (18) bzw. der sie tragende Ring (17) und das Gegenwerkzeug (16) über eine elektrische Verbindung (51) direkt mit dem die Elektroerosionsmaschine mit Energie versorgenden Generator (44) elektrisch verbunden sind.

6. Drahtschnetzler nach Anspruch 5, dadurch gekennzeichnet, daß die elektrische Verbindung (51) an eine Stromzuführung (42 bzw. 43) angeschlossen ist, mittels welcher die Elektrode (2) mit elektrischer Energie für den Elektroerosionsprozeß versorgt wird.

7. Drahtschnetzler nach einem oder mehreren der Ansprüche 1 bis 6, dadurch gekennzeichnet, daß die Schneideinrichtung (4) zum Schneiden mehrerer, parallel zueinander verlaufender Elektroden (2) ausgelegt ist und daß die Schneidelemente (18) und das Gegenwerkzeug (16) für jede Elektrode gegenüber den anderen Schneidelementen und Gegenwerkzeuge für die anderen Elektroden isoliert sind und elektrisch auf das Potential der individuell zugeführten Elektrode gebracht sind.

**Claims**

1. Wire cutter for cutting a wire- or band-shaped electrode which is delivered from an electroerosion machine, having a conveying device which transports the electrode and having a cutting device which has rotating cutting elements and a counter-tool, the rotating cutting elements or a ring holding them being insulated electrically relative to their drive shaft and the surface of the counter-tool being insulated electrically relative to its mounting support, characterised by an electrical connection (28, 29; 51, 52) which keeps the rotating cutting-elements (18) or the ring (17) holding them and the counter-tool (16) constantly, compulsorily, at the electric potential of the electrode (2).

2. Wire cutter according to claim 1, in which the conveying device is formed by a pair of conveyor rollers (6, 7), characterised in that the conveyor rollers (6, 7) are insulated electrically relative to their drive shaft (12) or axis of rotation (13) respectively (insulation 10, 11) and in that the electrical connection (28, 29) connects the conveyor rollers (6, 7) with the rotating cutting elements (18), or the ring (17) holding them, and the counter-tool (16).

3. Wire cutter according to claim 2, in which the counter-tool is a rotating roller (16), characterised in that the electrical connection is realized by means of sliding contacts (30, 31, 32, 33) and electrical leads (28, 29; 51, 52) connected to the latter.

4. Wire cutter according to claim 3, characterised in that one of the conveyor rollers (6) is directly electrically connected with the ring (17) holding the cutting elements (18) by means of an electrical lead (28) and sliding contacts (30, 32) and in that the other conveyor roller (7) is directly electrically connected with the rotating ring (22) of the counter-tool (16) by means of a further electrical lead (29) and sliding contacts (31, 33).

5. Wire cutter according to claim 1, characterised in that the cutting elements (18) or the ring (17) carrying them and the counter-tool (16) are electrically connected, by way of an electrical connection (51), directly with the generator (44) supplying the electroerosion machine with energy.

6. Wire cutter according to claim 5, characterised in that the electrical connection (51) is connected to a current supply (42 or 43), by means of which the electrode (2) is supplied with electric energy for the electroerosion process.

7. Wire cutter according to one or more of claims 1 to 6, characterised in that the cutting device (4) is designed for the purpose of cutting several electrodes (2) which run paralel to each other and in that the cutting elements (18) and the counter-tool (16) for each electrode are insulated relative to the other cutting elements and counter-tools for the other electrodes and are brought electrically to the potential of the individually supplied electrode.

**Revendications**

1. Coupe-fil pour couper une électrode filiforme ou en ruban délivrée par une machine d'électro-érosion, muni d'un dispositif de transport qui transporte l'électrode et d'un dispositif de coupe qui comporte des éléments de coupe tournants et un countre-outil, les éléments de coupe tournants, ou un anneau les maintenant, étant électriquement isolés par rapport à leur arbre d'entraînement et la surface du contre-outil étant isolée par rapport à sa fixation, caractérisé par une liaison électrique (28, 29, 51, 52), qui maintient obligatoirement les éléments de coupe tournants (18), ou l'anneau (17) de maintien de ceux-ci, et le contre-outil (16) constamment au potentiel électrique de l'électrode (2).

2. Coupe-fil selon la revendication 1, dans lequel le dispositif de transport est réalisé sous la forme d'une paire de galets de transport (6, 7), caractérisé en ce que les galets de transport (6, 7) sont isolés éctriquement par rapport à leur arbre d'entraînement (12), ou par rapport à leur axe de rotation (13) (isolation 10, 11) et en ce que la liaison électrique (28, 29) relie les galets de transport (6, 7) aux éléments de coupe tournants (18), ou à l'anneau (17) maintenant ceux-ci et au contre-outil (16).

3. Coupe-fil selon la revendication 2, dans lequel le contre-outil (16) est un galet tournant de lui-même, caractérisé en ce que la liaison électique est réalisée au moyen de contacts à frottement (30, 31, 32, 33) et de lignes électriques (28, 29, 51, 52) reliées à ceux-ci.

4. Coupe-fil selon la revendication 3, caractérisé en ce que l'un des galets de transport (6) est directement relié éctriquement à l'anneau (17) maintenant les éléments de coupe (18), au moyen d'une ligne électrique (28) et de contacts à frottement (30, 32) et en ce que l'autre galet de transport (7) est directement relié électriquement à l'anneau tournant de lui-même (22) de contro-outil (16), au moyen d'une ligne électrique (29) supplémenataire et de contacts à frottement (31, 33).

5. Coupe-fil selon la revendication 1, caractérisé en ce que les éléments de coupe (18), ou l'anneau (17) les portant et le contre-outil (16) sont directement reliés électriquement au générateur (44) alimentant la machine d'électro-érosion en énergie, par une liaison électrique (51).

6. Coupe-fil selon la revendication 5, caractérisé en ce que la liaison électrique (51) est raccordée à une alimentation de courant (42, 43), au moyen de laquelle l'électrode (2) est alimentée en énergie électrique pour le processus d'électro-érosion.

7. Coupe-fil selon une ou plusieurs des revendications 1 à 6, caractérisé en ce que le dispositif de coupe est déterminé pour couper plusieurs électrodes (2) passant parallèlement l'une par rapport à l'autre et en ce que les éléments de coupe (18) et le contre-outil (16) pour chaque électrode sont isolés par rapport aux autres éléments de coupe et aux autres contre-outils pour les autres électrodes et sont placés électriquement au potentiel de l'élec-trode alimentée individuellement.

*Fig. 1*

_Fig. 2_

_Fig. 3_